# EUROPEAN PATENT APPLICATION

(11) **EP 1 379 064 A2**
(43) Date of publication of application: **07.01.2004**
(21) Application number: 03254177.3
(22) Date of filing: 01.07.2003
(51) Int. Cl.: H04M 1/725

(54) **Selective incoming message notification**

(30) Priority: 01.07.2002 US 186443
(71) Applicant: Avaya Technology Corp., Basking Ridge, New Jersey 07920-2332 (US)
(72) Inventor: Seligmann, Doree Duncan, New York, New York 10021 (US)
(74) Representative: McCallum, Graeme David

(57) **Abstract**

A telecommunications terminal that intelligently determines whether to notify the user of an incoming message is disclosed. In the illustrative embodiments, the terminal has a processor that makes this determination based on one or more of the following: the time and date (820) (*i.e.,* the "calendrical time"), environmental parameters (840) (*e.g.,* temperature, ambient luminosity, *etc.*), the user's physiological parameters (850) (*e.g*., blood pressure, heart rate, *etc*.), the location of the user (830), the proximity of other wireless terminals in the vicinity, the semantic content of the message, the identity of the sender of the message, and whether the user is currently receiving another message. For example, a user might not want to be notified of an incoming message that arrives between 10:00 P.M. and 6:00 A.M. unless the user is awake or the sender of the message is a family member.

## Description

The present invention relates to telecommunications equipment in general, and, in particular, to a telecommunications terminal that intelligently decides whether to notify the user of an incoming message.

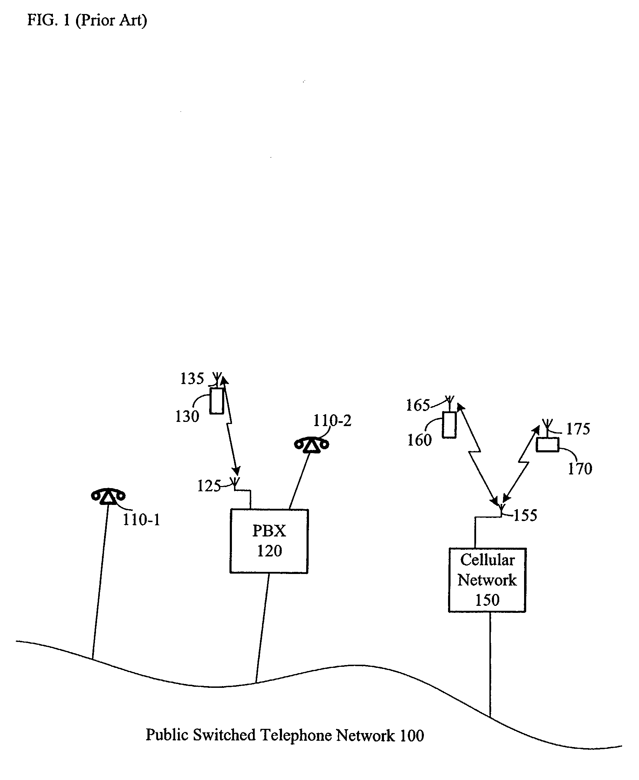

FIG. 1 depicts a rendering of an exemplary subnetwork attached to public switched telephone network (PSTN) 100. The subnetwork comprises: PBX 120, cellular network 150, and five telecommunications terminals: wireline telephones 110-1 and 110-2, wireless telephone 130, wireless telephone 160, and two-way pager 170. As shown in FIG. 1, PBX 120's antenna 125 communicates wirelessly with wireless telephone 130's antenna 135, and cellular network 150's antenna 155 communicates wirelessly with wireless telephone 160's antenna 165 and PDA 170's antenna 175. Telecommunications terminals, such as those depicted in FIG. 1, notify or alert a user when the terminal receives an incoming message.

In the prior art, a telecommunications terminal typically notifies the user of the arrival of a message except when:
(i) the user has disabled the notification mechanism *(e.g.,* turned off the "ringer", turned off the power, *etc.);*
(ii) the user is currently receiving another message *(e.g.,* a telephone user is speaking to another party, *etc.)* and the telecommunications terminal is not subscribed to an "interruption" service such as call waiting;
(iii) the sender of the message belongs to a user-defined list specifying senders from which messages should be automatically blocked.

The fact that the user can disable the notification mechanism on the telephone is advantageous, but the techniques for doing so in the prior art are somewhat limited. Therefore, the need exists for a more flexible technique that a user can use to disable the notification mechanism on his or her telephone.

The present invention enables a user to disable the notification on a telecommunications terminal without some of the costs and disadvantages for doing so in the prior art. In particular, the illustrative embodiment enables a telecommunications terminal to determine whether to notify the user of an incoming message based on one or more of the following: the time and date *(i.e.,* the "calendrical time"), environmental parameters *(e.g.,* temperature, ambient luminosity, *etc.),* the user's physiological parameters *(e.g.,* blood pressure, heart rate, *etc.),* the location of the user, the proximity of other wireless terminals in the vicinity, the semantic content of the message, the identity of the sender of the message, and whether the user is currently receiving another message. For example, a user might not want to be notified of an incoming message that arrives: (1) when the user is exercising, (2) at a movie theater, or (3) between 10:00 P.M. and 6:00 A.M. unless the user is awake or the sender of the message is a family member. The illustrative embodiment enables a user to program his or her telephone to disable the notification unless certain criteria are met.

The illustrative embodiment comprises: a receiver for receiving a signal addressed to a telecommunications terminal; and a processor for determining whether to notify a user of the signal's arrival based on the calendrical time at the telecommunications terminal.
FIG. 1 depicts a block diagram of an exemplary subnetwork attached to public switched telephone network (PSTN) 100.
FIG. 2 depicts a block diagram of wireless terminal 130, as shown in FIG. 1, in accordance with the illustrative embodiment of the present invention.
FIG. 3 depicts a block diagram of wireline terminal 110-i, as shown in FIG. 1, in accordance with the illustrative embodiment of the present invention.
FIG. 4 depicts a block diagram of wireless terminal 160, as shown in FIG. 1, in accordance with the illustrative embodiment of the present invention.
FIG. 5 depicts a block diagram of geo-location sensors 240, as shown in FIG. 2 and FIG. 4, in accordance with the illustrative embodiment of the present invention.
FIG. 6 depicts a block diagram of environmental sensors 250, as shown in FIGs. 2, 3, and 4, in accordance with the illustrative embodiment of the present invention.
FIG. 7 depicts a block diagram of physiological sensors 260, as shown in FIGs. 2, 3, and 4, in accordance with the illustrative embodiment of the present invention.
FIG. 8 depicts a flowchart of the operation of processor 290, as shown in FIGs. 2, 3, and 4, in accordance with the illustrative embodiment of the present invention.

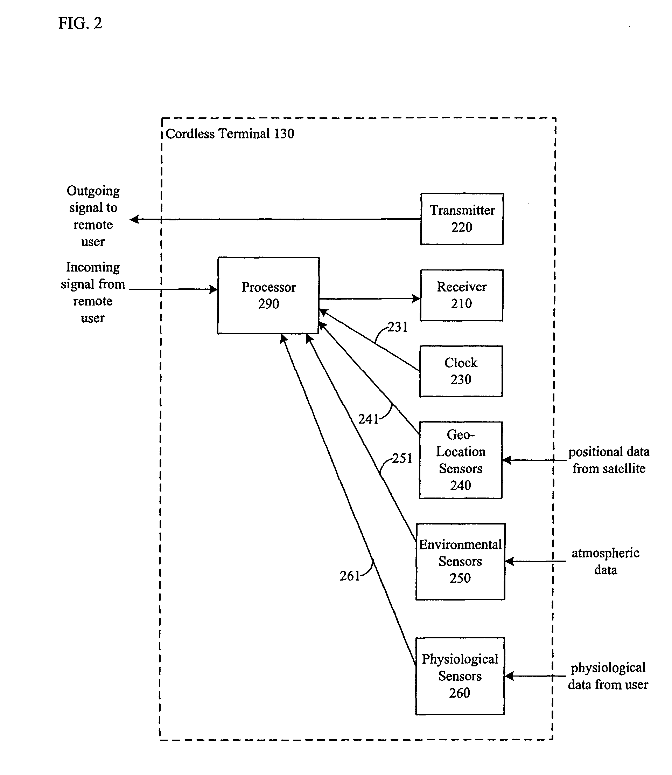

FIG. 2 depicts a block diagram of the salient components of wireless terminal 130, in accordance with the illustrative embodiment of the present invention. Wireless terminal 130 comprises: receiver 210, transmitter 220, clock 230, geo-location sensors 240, environmental sensors 250, physiological sensors 260, and processor 290, interconnected as shown.

Clock 230 transmits the current time, date, and day of the week to processor 290 along channel 231.

Geo-location sensor 240 receive satellite-based positional data, as is described in detail below, and transmit these data to processor 290 via channel 241, in well-known fashion.

Environmental sensor 250 receive atmospheric data, as is described in detail below, and transmit these data to processor 290 via channel 251.

Physiological sensor 260 receive atmospheric data, as is described in detail below, and transmit these data to processor 290 via channel 261.

Processor 290 receives an incoming message *(e.g.,* a telephone call, a fax, an e-mail, *etc.)* from a remote user, in well-known fashion, and determines whether to notify receiver 210 of the incoming signal based on the inputs it receives, as described above; details concerning how processor 290 makes such a determination are given below.
Transmitter 220 transmits signals to remote users, in well-known fashion.

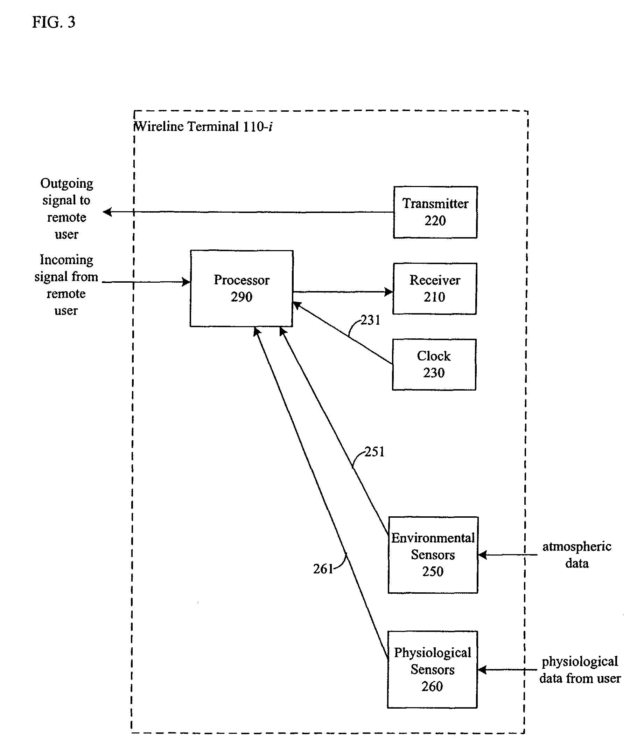

FIG. 3 depicts a block diagram of the salient components of wireline terminal 110-i, in accordance with the illustrative embodiment of the present invention. Wireline terminal 110-i comprises: receiver 210, transmitter 220, clock 230, environmental sensors 250, physiological sensors 260, and processor 290, interconnected as shown. As can be seen by comparing FIG. 3 with FIG. 2, wireline terminal 110-i is similar to wireless terminal 130, with the exception that wireline terminal 110-i does not have geo-location sensors 240, which are superfluous in a wireline terminal at a fixed position.

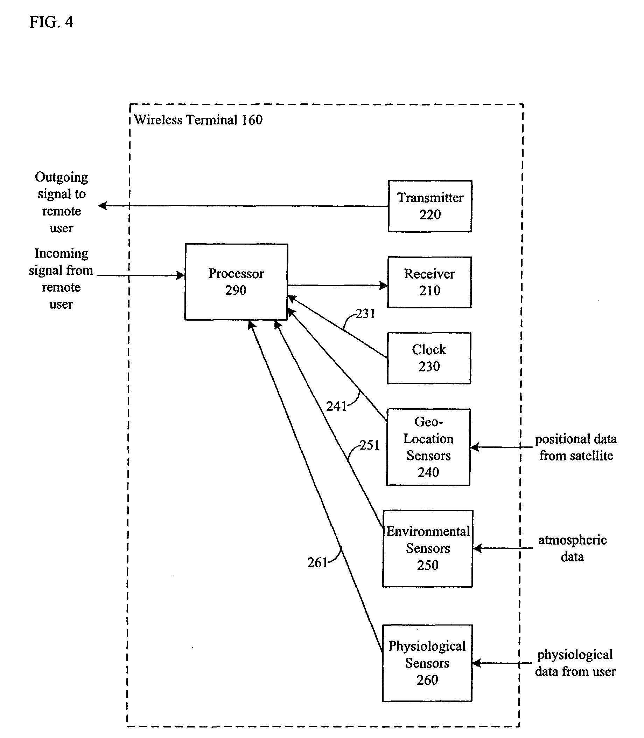

FIG. 4 depicts a block diagram of the salient components of wireless terminal 160, in accordance with the illustrative embodiment of the present invention. Wireline terminal 110-i comprises: receiver 210, transmitter 220, clock 230, geo-location sensors 240, environmental sensors 250, physiological sensors 260, and processor 290, interconnected as shown. As can be seen by comparing FIG. 4 with FIG. 2, wireless terminal 160 is similar to wireless terminal 130.

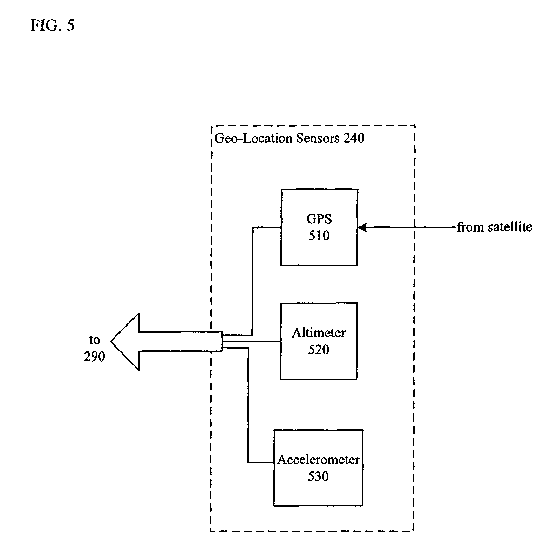

FIG. 5 depicts a block diagram of the salient components of geo-location sensors 240, in accordance with the illustrative embodiment of the present invention. Geo-location sensors 240 comprises: global positioning system (GPS) 510, altimeter 520, and accelerometer 530. GPS 510 receives satellite-based signals and determines global position, as is well understood in the art, and transmits the data to processor 290. In some embodiments, GPS 510 also transmits information to processor 290 concerning the geo-locations of other wireless terminals in the vicinity; as described below, processor 290 can consider this information in determining whether to notify the user of an incoming message. Altimeter 520 measures altitude, in well-known fashion, and transmits its measurements to processor 290; in some embodiments altimeter 520's readings are based on barometric pressure, and in some other embodiments altimeter 520 is radar-based. Accelerometer 530 measures acceleration, in well-known fashion, and transmits its measurements to processor 290.

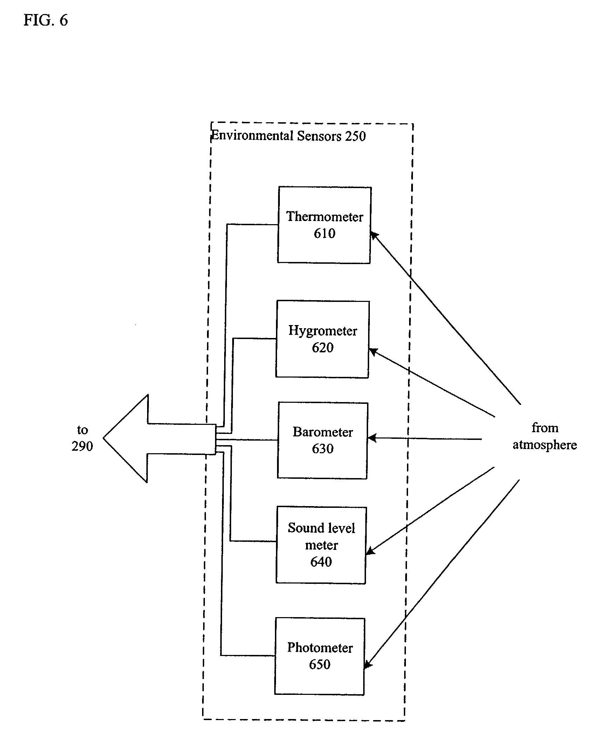

FIG. 6 depicts a block diagram of the salient components of environmental sensors 250, in accordance with the illustrative embodiment of the present invention. Environmental sensors 250 comprises: thermometer 610, hygrometer 620, barometer 630, sound level meter 640, and photometer 650, all of which receive information from the atmosphere. Thermometer 610 measures ambient temperature, in well-known fashion, and transmits its measurements to processor 290. Hygrometer 620 measures ambient humidity, in well-known fashion, and transmits its measurements to processor 290. Barometer 630 measures ambient air pressure, in well-known fashion, and transmits its measurements to processor 290. Sound level meter 640 measures ambient sound intensity, in well-known fashion, and transmits its measurements to processor 290. Photometer 650 measures ambient light intensity, in well-known fashion, and transmits its measurements to processor 290.

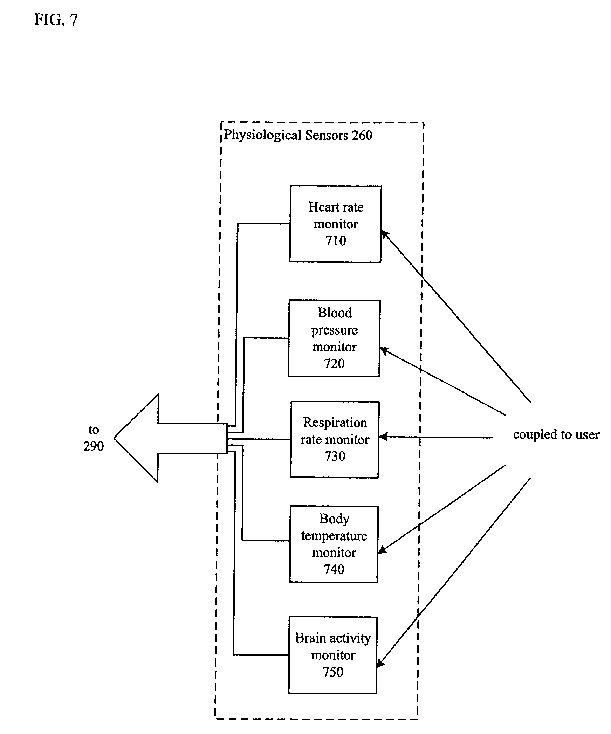

FIG. 7 depicts a block diagram of the salient components of physiological sensors 260, in accordance with the illustrative embodiment of the present invention. Physiological sensors 260 comprises: heart rate monitor 710, blood pressure monitor 720, respiration rate monitor 730, body temperature monitor 740, and brain activity monitor 750. In some embodiments, at least one of these monitors receives input from the user via at least one sensor coupled to a part of a user's body *(e.g.,* finger, forehead, *etc.),* wherein the sensor transmits data to the terminal either by a wire, or wirelessly. In some other embodiments, at least one of these monitors receives input from the user via at least one sensor located within the terminal, wherein the sensor receives physiological signals from the user when the user is holding the terminal. Heart rate monitor 710 measures the user's heart rate, in well-known fashion, and transmits its measurements to processor 290. Blood pressure monitor 720 measures the user's blood pressure , in well-known fashion, and transmits its measurements to processor 290. Respiration rate monitor 730 measures the user's respiration rate , in well-known fashion, and transmits its measurements to processor 290. Body temperature monitor 740 measures the user's body temperature, in well-known fashion, and transmits its measurements to processor 290. Brain activity monitor 750 measures the user's brain activity in well-known fashion *(e.g.,* EKG, *etc.),* and transmits its measurements to processor 290.

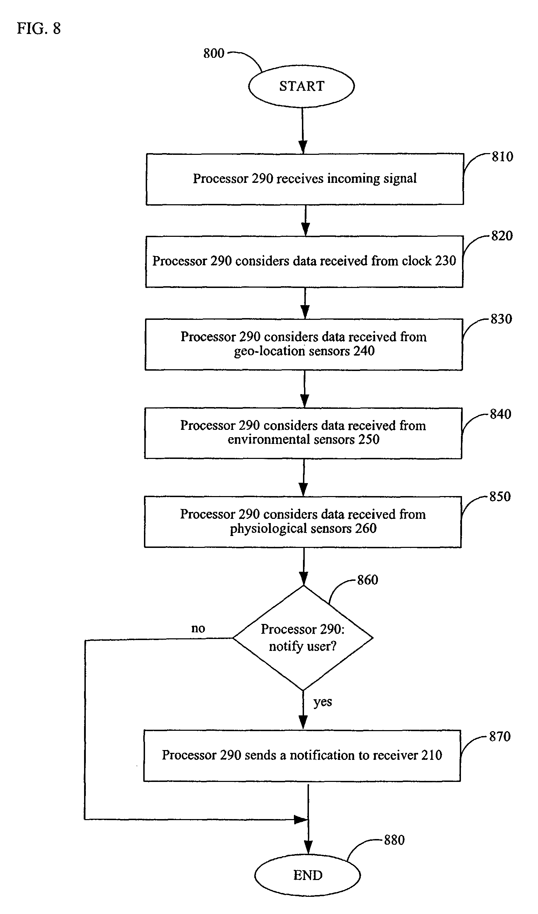

FIG. 8 depicts a flowchart of the operation of processor 290 according to the present invention.

At task 810, processor 290 receives an incoming message from a remote user.

At task 820, processor 290 considers data received from clock 230 for determining whether to notify the user of the incoming message.

At task 830, processor 290 considers data received from geo-location sensors 240 for determining whether to notify the user of the incoming message. As indicated above, this data can indicate situations in which a user should not be notified of a message; some possible examples include when:
- a user is inside a church or movie theater (the theory being that there are some places where a user might not want to be disturbed);
- a user is decelerating rapidly, which might indicate that the user is driving in a car and is slamming on the brakes to avoid hitting a pedestrian (the theory being that the user does not at that instant need the distraction of his or her telephone ringing);
- there are many other wireless terminals (and inferentially, people) right nearby (the theory being that the user might not want to disturb other people).

At task 840, processor 290 considers data received from environmental sensors 250 for determining whether to notify the user of the incoming message. Some possible situations in which a user should not be notified of a message are when:
- it is dark (the theory being that the user might be sleeping or in a quiet environment);
- the environment is very noisy (the theory that the user might not hear the notification).

At task 850, processor 290 considers data received from physiological sensors 260 for determining whether to notify the user of the incoming message. Some possible situations in which a user should not be notified of a message are when:
- a user is asleep;
- a user is engaged in strenuous activity.

At task 860, processor 290 decides, based on how its user has programmed it and the data from clock 230, geo-location sensors 240, environmental sensors 250, and physiological sensors 260, whether to notify the user of the arrival of the incoming message. When processor 290 decides to notify the user, control passes to step 870; otherwise processor 290 queues the message, if possible for delivery later, or if the message is a telephone call, sends the calling party to voice mail. When processor 290 queues the message for later, processor 290 rechecks periodically or sporadically if the circumstances have changed and, therefore, that the user should be notified of the incoming message.

At task 870, which occurs when processor 290 makes an affirmative decision in task 860, processor 290 sends a notification to receiver 210. The notification can be an alert, such as an audible tone, a vibration, a flashing light, etc. It will be clear to those skilled in the art how to notify a user as to the arrival of an incoming message.
It is to be understood that the above-described embodiments are merely illustrative of the present invention and that many variations of the above-described embodiments can be devised by those skilled in the art without departing from the scope of the invention. It is therefore intended that such variations be included within the scope of the following claims and their equivalents.

## Claims

1. An apparatus comprising:
a receiver for receiving a signal addressed to a telecommunications terminal; and
a processor for determining whether to notify a user of said signal's arrival based on the calendrical time at said telecommunications terminal.

2. The apparatus of claim 1 wherein said signal contains said calendrical time.

3. The apparatus of claim 1 further comprising a clock for providing said calendrical time to said processor.

4. The apparatus of claim 1 wherein said processor's determining is also based on the identity of the sender of said signal.

5. The apparatus of claim 1 wherein said processor's determining is also based on whether said receiver is receiving another signal.

6. An apparatus comprising:
a receiver for receiving a signal addressed to a telecommunications terminal;
a processor for determining whether to notify a user of said signal's arrival based on at least one of
(i) the geo-location of said telecommunications terminal,
(ii) a change in the geo-location of said telecommunications terminal, and
(iii) the proximity of said geo-location to another person.

7. The apparatus of claim 6 wherein said geo-location of said receiver comprises: altitude.

8. The apparatus of claim 6 wherein said change in the geo-location of said receiver includes at least one of velocity and acceleration.

9. The apparatus of claim 6 wherein said processor's determining is also based on the calendrical time at said telecommunications terminal.

10. The apparatus of claim 6 wherein said processor's determining is also based on the identity of the sender of said signal.

11. The apparatus of claim 6 wherein said processor's determining is also based on whether said receiver is receiving another signal.

12. A telecommunications terminal comprising:
a receiver for receiving a signal addressed to said telecommunications terminal;
a sensor for sensing at least one environmental parameter; and
a processor for determining whether to notify a user of said signal's arrival based on at least one of
(i) the value of at least one of said environmental parameters, and
(ii) a change in the value of at least one of said environmental parameters.

13. The telecommunications terminal of claim 12 wherein at least one of said environmental parameters is selected from the group consisting of: temperature, humidity, air pressure, ambient noise level, and ambient luminosity.

14. The telecommunications terminal of claim 12 wherein said processor's determining is also based on the calendrical time at said telecommunications terminal.

15. The telecommunications terminal of claim 12 wherein said processor's determining is also based on the identity of the sender of said signal.

16. The telecommunications terminal of claim 12 wherein said processor's determining is also based on whether said receiver is receiving another signal.

17. The telecommunications terminal of claim 12 wherein said processor's determining is also based on at least one of
(i) the geo-location of said telecommunications terminal,
(ii) a change in the geo-location of said telecommunications terminal, and
(iii) the proximity of said geo-location to another person.

18. An apparatus comprising:
a receiver for receiving a signal addressed to a telecommunications terminal; and
a processor for determining whether to notify a user of said signal's arrival based on the semantic content of said signal.

19. The apparatus of claim 18 wherein said processor's determining is also based on the calendrical time at said telecommunications terminal.

20. The apparatus of claim 18 wherein said processor's determining is also based on the identity of the sender of said signal.

21. The apparatus of claim 18 wherein said processor's determining is also based on whether said receiver is receiving another signal.

22. The apparatus of claim 18 wherein said processor's determining is also based on at least one of
(i) the geo-location of said telecommunications terminal,
(ii) a change in the geo-location of said telecommunications terminal, and
(iii) the proximity of said geo-location to another person.

23. The apparatus of claim 18 wherein said processor's determining is also based on the relevance of said semantic content to said other person.

24. The apparatus of claim 18 further comprising a sensor for sensing at least one environmental parameter at said telecommunications terminal; and wherein said processor's determining is also based on at least one of
(i) the value of at least one of said environmental parameters, and
(ii) a change in the value of at least one of said environmental parameters.

25. A telecommunications terminal comprising:
a receiver for receiving a signal addressed to said telecommunications terminal;
a sensor for sensing at least one physiological parameter of a user; and
a processor for determining whether to alert said user to said signal's arrival based on at least one of
(i) the value of at least one of said physiological parameters, and
(ii) a change in the value of at least one of said physiological parameters.

26. The telecommunications terminal of claim 25 wherein at least one of said physiological parameters is selected from the group consisting of: heart rate, blood pressure, respiration rate, body temperature, and brain activity.

27. The telecommunications terminal of claim 25 wherein said processor's determining is also based on the calendrical time at said telecommunications terminal.

28. The telecommunications terminal of claim 25 wherein said processor's determining is also based on the identity of the sender of said signal.

29. The telecommunications terminal of claim 25 wherein said processor's determining is also based on whether said receiver is receiving another signal.

30. The telecommunications terminal of claim 25 wherein said processor's determining is also based on at least one of
(i) the geo-location of said telecommunications terminal,
(ii) a change in the geo-location of said telecommunications terminal, and
(iii) the proximity of said geo-location to another person.

31. The telecommunications terminal of claim 25 further comprising a second sensor for sensing at least one environmental parameter; and wherein said processor's determining is also based on at least one of
(i) the value of at least one of said environmental parameters, and
(ii) a change in the value of at least one of said environmental parameters.

32. The telecommunications terminal of claim 31 wherein said first sensor and said second sensor are the same.

33. The telecommunications terminal of claim 25 wherein said processor's determining is also based on the semantic content of said signal.
